# DEMANDE DE BREVET EUROPEEN

(11) **EP 1 582 764 A1**
(43) Date de publication de la demande: **05.10.2005**
(21) Numéro de dépôt: 05290670.8
(22) Date de dépôt: 25.03.2005
(51) Int. Cl.: F16F 1/32

(54) **Dispositif antivibratoire pour vehicule et biellette comportant un tel dispositif**

(30) Priorité: 29.03.2004 FR 0403224
(71) Demandeur: HUTCHINSON, 75008 Paris (FR)
(72) Inventeur: Aazizou Khalid, 28200 La Chapelle du Noyer (FR); Compain Laurent, 45190 Beaugency (FR)
(74) Mandataire: Burbaud, Eric

(57) **Abrégé**

Dispositif antivibratoire comportant une armature tubulaire externe (12) et une armature interne (14), disposée dans l'armature externe (12), deux corps en élastomère (16, 18) disposés de part et d'autre de l'armature interne (14), dans l'armature externe (12), les corps en élastomère (16, 18) étant solidarisés à une première armature. Le corps élastomère (16, 18) est solidarisé en outre à une armature intermédiaire (26) qui est adjacente à la deuxième armature et qui est adapté pour être en appui contre ladite deuxième armature lorsque les premières et deuxièmes armatures se déplacent l'une contre l'autre dans un sens correspondant à une compression dudit corps en élastomère (16, 18), chaque armature intermédiaire (26) étant libre par rapport à la deuxième armature.

## Description

La présente invention est relative aux dispositifs antivibratoires pour véhicule, tels que des supports de moteur, des manchons antivibratoires pour biellettes de reprise de couple ou similaires, des supports de lignes d'échappement, ou autres, et une biellette comportant de tels dispositifs.

Plus particulièrement, l'invention concerne un dispositif antivibratoire comportant une première armature annulaire entourant une deuxième armature, les armatures définissant entre elles un espace libre, au moins un premier corps en élastomère étant disposé au moins en partie dans l'espace libre entre les première et deuxième armatures, le premier corps étant solidarisé à la première armature, le premier corps en élastomère étant solidarisé en outre à une première armature intermédiaire qui est adjacente à la deuxième armature.

La présente invention a pour but de perfectionner encore les dispositifs antivibratoires de ce type, notamment en améliorant leur durée de vie.

A cet effet, selon l'invention, un dispositif antivibratoire du genre en question est caractérisé en ce que l'armature intermédiaire possède une surface d'appui adaptée pour venir en appui contre une surface d'appui de forme complémentaire appartenant à la deuxième armature, et l'armature intermédiaire étant adaptée pour être en appui contre ladite deuxième armature lorsque les première et deuxième armatures se déplacent l'une par rapport à l'autre selon une première direction, dans un premier sens correspondant à une compression dudit premier corps en élastomère, ladite première armature intermédiaire étant libre par rapport à la deuxième armature, et étant adaptée pour se séparer de ladite deuxième armature lorsque les première et deuxième armatures se déplacent l'une par rapport à l'autre dans un deuxième sens opposé audit premier sens.

Grâce à ces dispositions, au moins le premier corps en élastomère ne subit que des contraintes de compression et pas de contrainte de traction, ce qui augmente sa durée de vie. De plus l'armature intermédiaire peut éventuellement augmenter la raideur axiale du dispositif, selon la direction de sollicitation, c'est à dire sa raideur parallèlement à l'axe X, mais permet aussi d'avoir une plus grande plage de linéarité, c'est-à-dire d'avoir une raideur du dispositif sensiblement stable pour différentes sollicitations.

Dans divers modes de réalisation du procédé selon l'invention, on peut éventuellement avoir recours en outre à l'une et/ou à l'autre des dispositions suivantes :
- le dispositif comporte en outre un deuxième corps en élastomère qui est disposé dans l'espace libre entre les première et deuxième armatures, les premier et deuxième corps en élastomère étant disposés respectivement de part et d'autre de l'une des première et deuxième armatures, ledit deuxième corps étant solidarisé à la première armature et à une deuxième armature intermédiaire qui est adjacente à la deuxième armature et qui est adaptée pour être en appui contre ladite deuxième armature lorsque les première et deuxième armatures se déplacent l'une par rapport à l'autre dans ledit deuxième sens, ladite deuxième armature intermédiaire étant libre par rapport à la deuxième armature et étant adaptée pour se séparer de ladite deuxième armature lorsque les première et deuxième armatures se déplacent l'une par rapport à l'autre dans le premier sens ;
- l'armature intermédiaire est en contact avec la deuxième armature en l'absence de sollicitation externe ;
- un jeu est ménagé entre l'armature intermédiaire et la deuxième armature, en l'absence de sollicitation externe ;
- les première et deuxième armatures sont reliées entre elles en outre par des troisième et quatrième corps en élastomère qui sont logés au moins en partie dans l'espace libre entre lesdites première et deuxième armatures, respectivement de part et d'autre de l'une des première et deuxième armatures, chacun des troisième et quatrième corps en élastomère étant solidarisé à la fois avec les première et deuxième armatures ;
- les troisième et quatrième corps en élastomère s'étendent sensiblement selon une deuxième direction sensiblement perpendiculaire à la première direction.

Par ailleurs l'invention a également pour objet une biellette de reprise de couple, comportant un dispositif antivibratoire, tel que défini ci-dessus.

D'autres caractéristiques et avantages de l'invention apparaîtront au cours de la description suivante de trois de ses modes de réalisation, donnés à titre d'exemples non limitatifs, en regard des dessins joints.

Sur les dessins :
- la figure 1 est une vue schématique d'un dispositif antivibratoire selon une forme de réalisation de l'invention, servant à relier une biellette de reprise de couple à la caisse d'un véhicule,
- la figure 2 est une vue schématique d'une coupe transversale d'un dispositif antivibratoire selon un premier mode de réalisation de l'invention, utilisable par exemple dans l'application représentée sur la figure 1,
- et la figure 3 est une vue similaire à la figure 2, représentant un deuxième mode de réalisation de l'invention.

Sur les différentes figures, les mêmes références désignent des éléments identiques ou similaires.

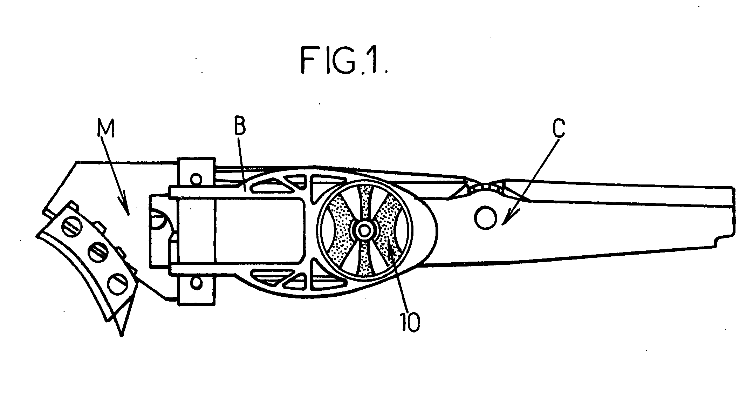

La figure 1 montre un groupe motopropulseur M de véhicule qui est relié à la caisse C dudit véhicule notamment par une biellette B de reprise de couple. L'une des extrémités de la biellette B est reliée à la caisse C par un dispositif antivibratoire 10 selon une forme de réalisation de l'invention, l'autre extrémité de la biellette comportant un autre manchon antivibratoire pouvant par exemple être de type connu, raccordé au moteur.

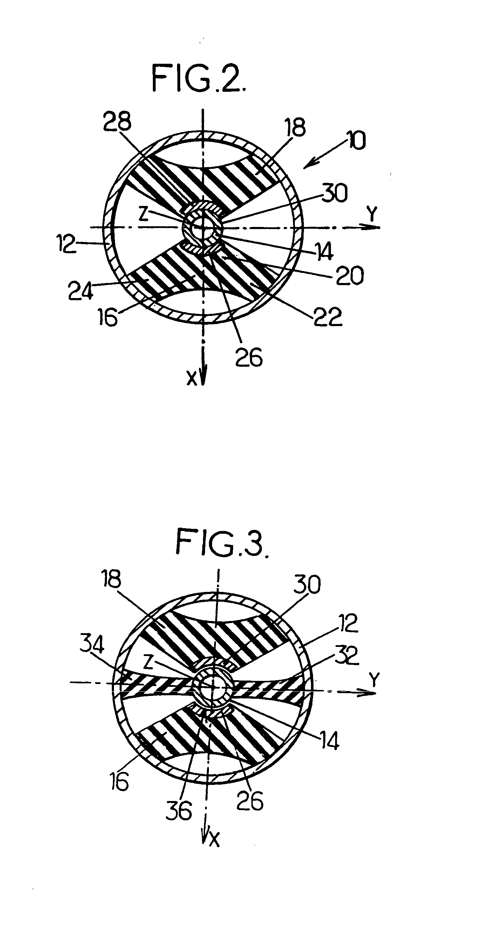

Un premier mode de réalisation du dispositif antivibratoire 10 susmentionné est représenté sur la figure 2. Ce dispositif antivibratoire 10 se présente sous la forme d'un manchon et comprend des première et deuxième armatures qui s'entourent l'une l'autre. Plus particulièrement, dans l'exemple de la figure 2, le dispositif antivibratoire 10 comprend une armature externe tubulaire 12 et une armature interne tubulaire 14 entourée par l'armature externe 12. Ces armatures 12, 14 sont réalisées en un matériau rigide, généralement en métal. Telles que représentées sur la figure 2, les armatures 12, 14 sont centrées sur un même axe central Z.

Par ailleurs, le dispositif 10 comprend aussi des premier et deuxième corps en élastomère 16, 18 qui peuvent éventuellement former une seule pièce d'élastomère et qui sont situés de part et d'autre de l'armature interne 14 et à l'intérieur de l'armature externe 12. Chacun de ces corps en élastomère 16, 18 est solidarisé à l'armature externe 12. Chacun des corps en élastomère 16, 18 est ici en forme de chevron, c'est à dire en forme de V dont la pointe 20 est dirigée vers l'armature interne 14, et dont les deux autres extrémités 22, 24 sont fixées à la surface intérieure de l'armature externe 12, notamment par adhérisation. Ces deux corps 16, 18 sont placés de manière sensiblement symétrique par rapport à un plan médian contenant l'axe Z susmentionné et un axe Y perpendiculaire à l'axe Z.

La pointe 20 de chaque corps en élastomère 16, 18 comporte une armature intermédiaire 26, 28 adjacente à l'armature interne 14, qui prend appui sur cette dernière en l'absence de sollicitations, sans pour autant être fixée à ladite armature intérieure. Cette armature intermédiaire 26, 28 est constituée d'un matériau rigide, tel que du métal. Telle que représentée, l'armature intermédiaire 26, 28 possède une surface d'appui 30 de forme complémentaire à celle de l'armature interne 14, c'est-à-dire, dans ce cas, un arc de cercle. La longueur de l'armature intermédiaire 26 est égale à celle de la surface du corps en élastomère 16 sur laquelle elle est fixée.

Lorsque le dispositif 10 n'est soumis à aucune sollicitation, les armatures intermédiaires 26, 28 des corps en élastomère 16, 18 sont en appui contre la surface extérieure de l'armature interne 14.

Lorsque qu'une force est appliquée entre les première et deuxième armatures selon un axe X perpendiculaire aux axes Y, Z susmentionnés, par exemple dans un premier sens tendant à comprimer le corps en élastomère 16, le corps en élastomère 18 reste immobile, l'armature intermédiaire 28 n'étant pas fixée sur l'armature interne 14. De même, lorsqu'une force est appliquée selon la direction X mais dans un deuxième sens opposé au premier sens, le corps en élastomère 16 reste immobile tandis que le corps en élastomère 18 est comprimé.

On évite ainsi que l'un des corps en élastomère 18 ne subisse une force de traction lorsque l'autre corps en élastomère 16 subit une force de compression, et par conséquent on augmente la durée de vie des corps en élastomère.

De plus l'élément intermédiaire 26, 28 augmente la raideur du dispositif antivibratoire selon l'axe X. Il permet aussi d'avoir une plus grande plage de linéarité, c'est à dire d'avoir une raideur du dispositif sensiblement stable pour différentes sollicitations.

Les corps en élastomère 16, 18 étant complètement indépendants l'un de l'autre, il pourrait éventuellement être possible de les réaliser en des élastomères différents, en fonction du sens de sollicitation du dispositif.

Le deuxième mode de réalisation de l'invention, représenté sur la figure 3 , est similaire au premier mode de réalisation décrit ci-dessus et ne sera donc pas décrit en détail ici ; seules les différences par rapport au premier mode de réalisation seront détaillées.

A la figure 3, il existe un jeu 36 entre les armatures intermédiaires 26, 28 et l'armature interne 14, en l'absence de sollicitation. Ainsi l'armature interne 14 vient en appui contre l'armature intermédiaire 26, 28 seulement lorsqu'une des deux armatures se déplace sur une distance au moins égale au jeu 36 existant. Ce jeu 36 permet de ne pas solliciter les armatures intermédiaires 26, 28 lors de faibles déplacements de l'armature interne 14, autour de son point d'équilibre, et donc de ne pas transmettre de mouvement à l'armature externe 12, par les corps en élastomère 16, 18.

De façon analogue, le jeu peut être aménagé entre chaque armature intermédiaire et l'armature externe d'un dispositif antivibratoire du type de celui représenté à la figure 3.

Dans un autre mode de réalisation, illustré à la figure 3, le dispositif 10 comprend un troisième et un quatrième corps en élastomère 32, 34, logés entre l'armature interne et l'armature externe, et adhérisés à chacune d'entre elles de façon diamétralement opposée par rapport à l'armature interne, et situé selon un axe perpendiculaire à celui des corps en élastomère 16, 18. Cet élément filtrant 32 permet d'absorber les vibrations lors du mouvement de l'armature interne 14, mais avec un effort plus faible, et sans solliciter les armatures intermédiaires, s'il existe un jeu 34 tel que décrit précédemment.

Il est aussi possible, grâce au dispositif 10 selon l'invention, de créer un batteur formé de l'élément intermédiaire 26, 28, 27, 29 et du corps en élastomère 16, 18. C'est à dire que l'élasticité du corps en élastomère 16, 18 et la masse de l'élément intermédiaire 26, 28, 27, 29 sont calculés de manière à obtenir un batteur permettant, par effet de résonance d'obtenir une courbe de réponse souhaitée en fonction de la fréquence de vibration.

## Revendications

1. Dispositif antivibratoire comportant une première armature (12) annulaire entourant une deuxième armature (14), les armatures (12,14) définissant entre elles un espace libre, au moins un premier corps en élastomère (16) étant disposé au moins en partie dans l'espace libre entre les première et deuxième armatures (12, 14), le premier corps (16) étant solidarisé à la première armature (12), le premier corps (16) en élastomère étant solidarisé en outre à une première armature intermédiaire (26) qui est adjacente à la deuxième armature (14) **caractérisé en ce que** l'armature intermédiaire (26) possède une surface d'appui adaptée pour venir en appui contre une surface d'appui de forme complémentaire appartenant à la deuxième armature (14), et l'armature intermédiaire (26) étant adaptée pour être en appui contre ladite deuxième armature (14) lorsque les premières et deuxièmes armatures (12, 14) se déplacent l'une par rapport à l'autre selon une première direction, dans un premier sens correspondant à une compression dudit premier corps (16) en élastomère, ladite première armature intermédiaire (26) étant libre par rapport à la deuxième armature (14), et étant adaptée pour se séparer de ladite deuxième armature (14)lorsque les première et deuxième armatures (12, 14) se déplacent l'une par rapport à l'autre dans un deuxième sens opposé audit premier sens.

2. Dispositif selon la revendication 1, **caractérisé en ce que** le dispositif comporte en outre un deuxième corps (18)en élastomère qui est disposé dans l'espace libre entre les première et deuxième armatures (12, 14), les premier et deuxième corps en élastomère (16, 18) étant disposés respectivement de part et d'autre de la deuxième armature (14), ledit deuxième corps (18) étant solidarisé à la première armature (12) et à une deuxième armature intermédiaire (28) qui est adjacente à la deuxième armature (14) et qui est adaptée pour être en appui contre ladite deuxième armature (14) lorsque les premières et deuxièmes armatures (12, 14) se déplacent l'une par rapport à l'autre dans ledit deuxième sens, ladite deuxième armature intermédiaire (28) étant libre par rapport à la deuxième armature (14) et étant adaptée pour se séparer de ladite deuxième armature (14) lorsque les première et deuxième armatures (12, 14) se déplacent l'une par rapport à l'autre dans le premier sens.

3. Dispositif selon l'une quelconque des revendications précédentes, **caractérisé en ce que** l'armature intermédiaire (26, 28) est en contact avec la deuxième armature (12, 14) en l'absence de sollicitation externe.

4. Dispositif selon l'une quelconque des revendications 1 à 2, **caractérisé en ce que** un jeu (36) est ménagé entre l'armature intermédiaire et la deuxième armature, en l'absence de sollicitation externe.

5. Dispositif selon l'une quelconque des revendications précédentes, **caractérisé en ce que** les première et deuxième armatures (12, 14) sont reliées entre elles en outre par des troisième et quatrième corps (32, 34) en élastomère qui sont logés au moins en partie dans l'espace libre entre lesdites première et deuxième armatures (12, 14), respectivement de part et d'autre de la deuxième armature (14), chacun des troisième et quatrième corps (32, 34) en élastomère étant solidarisé à la fois avec les première et deuxième armatures (12, 14).

6. Dispositif selon la revendication précédente, **caractérisé en ce que** les troisième et quatrième corps (32, 34) en élastomère s'étendent sensiblement selon une deuxième direction sensiblement perpendiculaire à la première direction.

7. Biellette de reprise de couple, **caractérisée en ce qu'**elle comporte au moins à l'une de ses extrémités un dispositif antivibratoire selon l'une des revendications précédentes.
